Europäisches Patentamt

European Patent Office

Office européen des brevets

(19)

(11) Numéro de publication: **0 014 644**

**A1**

(12) **DEMANDE DE BREVET EUROPEEN**

(21) Numéro de dépôt: **80400156.8**

(22) Date de dépôt: **31.01.80**

(51) Int. Cl.³: **F 01 L 1/18**
**F 01 L 1/26**

(30) Priorité: **31.01.79 FR 7902507**

(43) Date de publication de la demande:
**20.08.80 Bulletin 80/17**

(84) Etats Contractants Désignés:
**BE CH DE GB IT NL**

(71) Demandeur: **SOCIETE D'ETUDES DE MACHINES THERMIQUES S.E.M.T.**
**2, Quai de Seine**
**F-93202 Saint-Denis(FR)**

(72) Inventeur: **Pollet, Jean-Pierre**
**3 Place de la Rèpublique**
**F-95400 Arnouville Les Gonesse(FR)**

(74) Mandataire: **Weinstein, Zinovi et al,**
**Cabinet Z. WEINSTEIN 20, Avenue de Friedland**
**F-75008 Paris(FR)**

(54) **Dispositif de support pour la culbuterie d'un moteur à combustion interne, notamment d'un moteur de grande taille.**

(57) L'invention concerne un dispositif de support de la culbuterie d'un moteur à combustion interne.

Le dispositif comprend un culbuteur en fourche pour la commande de deux soupapes d'échappement et un culbuteur à deux bras pour la commande de deux soupapes d'admission. Selon l'invention, le tourillon (28, 30) du culbuteur d'échappement (1) est fixé au bloc support (16) par des tirants de fixation (31), individuels séparés, pour être démontables tout en laissant en place le culbuteur d'admission.

L'invention est notamment applicable aux moteurs de grande taille.

**EP 0 014 644 A1**

- 1 -

Dispositif de support pour la culbuterie d'un moteur
à combustion interne, notamment d'un moteur de grande
taille.

L'invention a pour objet un dispositif de support de la culbuterie d'un moteur à combustion interne, notamment d'un moteur de grande taille comprenant un dispositif de soupapes d'admission et un dispositif de soupapes d'échappement, commandés respectivement par un seul dispositif culbuteur actionné par l'intermédiaire d'une tige de poussoir par une came de commande mue par le moteur.

Des dispositifs de support pour la culbuterie d'un moteur à combustion interne sont connus, qui comprennent un bloc de support fixé de façon amovible sur la culasse du moteur et dans lequel sont montés les deux dispositifs culbuteurs, chacun rotatif autour d'un tourillon, un des dispositifs culbuteurs étant disposés au niveau de la partie centrale du support et l'autre dispositif, notamment à deux bras pour la commande simultanée de deux soupapes étant située latéralement du support, avec un bras de chaque côté de celui-ci.

Ce dispositif de support connu a pour inconvénient que, pour pouvoir démonter une soupape d'échappement il est nécessaire d'enlever de la culasse le support avec l'ensemble de la culbuterie. Après la remise en place de la culbuterie, il est nécessaire de régler les jeux de toutes les soupapes. Ces opérations déjà longues et relativement difficiles dans le cas de moteurs de taille moyenne se révèlent encore plus compliquées pour les moteurs de grande taille, en raison du poids très important de la culbuterie et du support.

Pour éliminer cet inconvénient, il est connu pour une culbuterie comprenant un culbuteur en fourche pour la commande des soupapes d'échappement et un culbuteur à deux bras pour la commande des soupapes d'admission, de réaliser par exemple les culbuteurs d'échappement en deux parties qui forment en état de fonctionnement un ensemble rigide, mais peuvent être désolidarisées pour permettre l'écartement du culbuteur de la trajectoire de démontage de la soupape considérée. Le même effet peut être obtenu en conformant le guidage dans la culasse, de la tige de poussoir du culbuteur de telle sorte que ce dernier peut être écarté après avoir été désolidarisé du culbuteur, de la trajectoire de pivotement de ce dernier autour de son tourillon, ce qui permet le dégagement de la trajectoire de démontage de la soupape par le pivotement du culbuteur dans son ensemble.

Il s'est avéré que ces mesures sont valables pour des moteurs de taille moyenne, mais difficilement transposables sur les moteurs de grande taille qui posent des problèmes particuliers. Le poids, l'inertie et les forces mises en jeu dans le cas d'un moteur de grande taille sont plus importants, ce qui exige que les supports soient plus rigides et les moyens de fixation plus complexes. Les culbuteurs sont par conséquent plus lourds et l'espace libre de manoeuvre sur la culasse est plus limité. En outre, les soupapes sont montées dans des chapelles refroidies, de gabarit relativement important. Il en résulte que leur démontage nécessite des opérations plus complexes et exige un espace de manoeuvre plus grand.

L'invention propose un dispositif de support qui élimine les inconvénients des dispositifs connus et résoud les problèmes particuliers qui viennent d'être évoqués.

Le dispositif de support de la culbuterie d'un moteur à combustion interne, notamment un moteur de grande taille, du type comprenant un bloc de support fixé de façon amovible sur la culasse du moteur et dans lequel sont montés deux dispositifs culbuteurs, chacun rotatif autour d'un tourillon, un dispositif culbuteur pour la commande d'un dispositif de soupape d'échappement et l'autre pour la commande d'un dispositif de soupape d'admission, avec un dispositif culbuteur étant disposé au niveau de la partie centrale des supports et l'autre dispositif notamment du type à deux bras, pour la commande simultanée de deux soupapes étant situé latéralement du support, est caractérisé selon l'invention par le fait que chaque dispositif culbuteur est monté dans ledit support, de façon sélectivement amovible, sans démontage du support et/ou de l'autre dispositif culbuteur.

Selon une caractéristique avantageuse de l'invention, le tourillon du dispositif culbuteur central est logé dans le support de façon à être démontable par le haut.

Une caractéristique de l'invention réside dans le fait que le tourillon du dispositif culbuteur central est fixé sur le support par deux tirants de fixation individuels.

L'invention sera mieux comprise, et d'autre buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

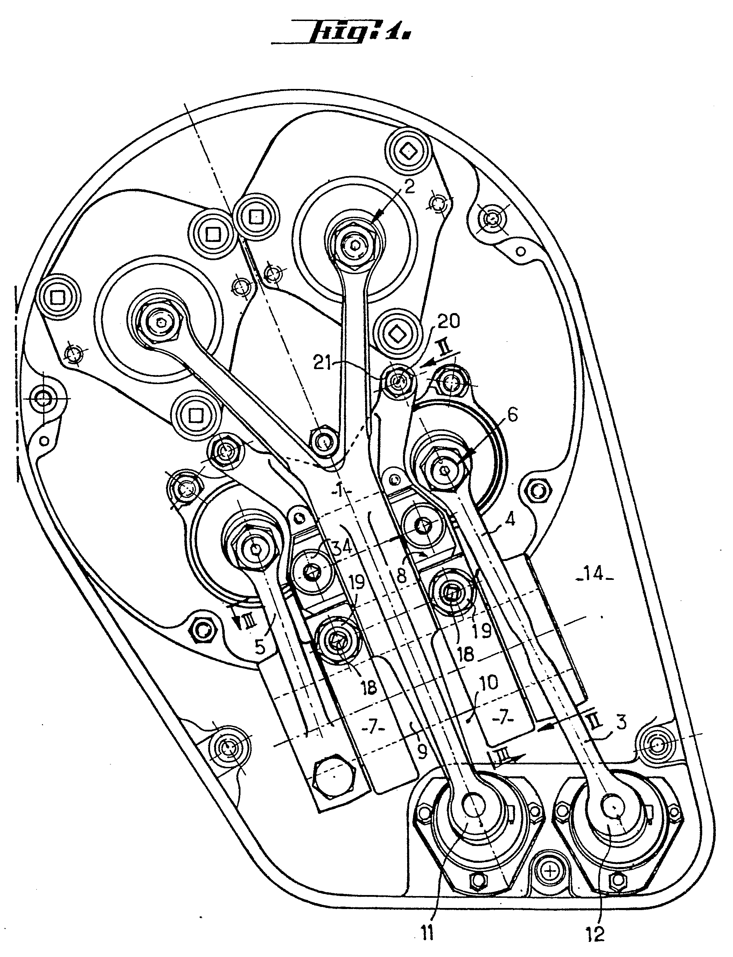

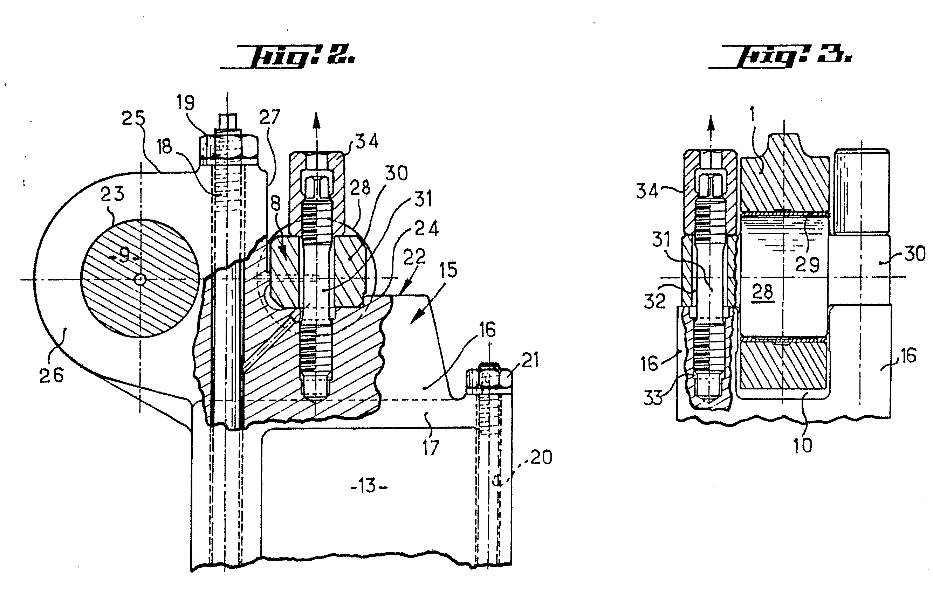

La figure 1 montre en une vue de dessus le dispositif de support de la culbuterie, montée sur la culasse, selon l'invention; la figure 2 est une vue latérale du dispositif support selon l'invention, suivant la ligne II-II de la figure 1, mais à plus grande échelle et avec arrachement et sans les culbuteurs; la figure 3 est une coupe partielle selon la ligne III-III de la figure 1, à plus grande échelle.

La culbuterie illustrée sur la figure 1, notamment conçue pour un moteur à combustion interne de grande taille comprend, pour un cylindre du moteur, un culbuteur à fourche 1 pour la commande simultanée de deux soupapes d'échappement 2 et un culbuteur 3 à deux bras 4, 5 pour la commande simultanée de deux soupapes d'admission 6. Chaque culbuteur est monté rotatif autour d'un tourillon logé dans un support 7. Le tourillon du culbuteur d'échappement 1 est désigné par le chiffre de référence 8. Le culbuteur d'admission 3 porte le chiffre de référence 9. Dans le support, sensiblement au milieu de celui-ci est ménagé un espace 10 à travers lequel s'étend le culbuteur d'échappement 1. Les deux bras 4, 5 du culbuteur d'admission 3 sont situés respectivement de part et d'autre du support 7.

L'extrémité 11, 12 des culbuteurs 1, 3 qui est opposée à celle destinée à agir sur les soupapes 2, 6 est adaptée pour coopérer avec une tige de poussoir non représentée. Chaque tige est actionnée par une came de commande solidaire en rotation d'un arbre mû par le moteur. Les cames et l'arbre ne sont également pas représentés.

Comme il ressort des figures, le support 7 comprend une partie inférieure formant socle 13 par lequel il prend appui sur la culasse 14 et une partie supérieure adaptée au logement des tourillons 8, 9. Dans se partie supérieure 15 le support 7 comporte deux parois verticales 16, parallèles l'une à l'autre et à l'axe du culbuteur d'échappement 1. Ces parois délimitent entre elles l'espace 10 permettant le passage du culbuteur d'échappement 1. Elles s'étendent à partir d'une partie formant base 17 du support, vers le haut, c'est-à-dire perpendiculairement par rapport au plan de la culasse 14. Les tourillons 8 et 9 sont supportés par les parois latérales 16 et se trouvent sensiblement dans un même plan, qui s'étendent horizontalement sur les figures, l'un parallèle à l'autre.

Le support 7 est fixé sur la culasse 14 par deux longs tirants de fixation 18 à écrou 19 qui traversent les parois latérales 16 et le socle 13 sensiblement au milieu entre les deux tourillons 8 et 9 et deux tourillons de fixation plus courts 20 à écrou 21. Ces derniers se trouvent au niveau de la base 17 du support 7. Les tirants longs 17 sont placés dans le support du côté des tiges de poussoir et les tirants 20 au niveau de l'extrémité du support 7, qui est adjacente aux soupapes 2, 6.

Selon l'invention, le tourillon 8 du culbuteur d'échappement repose par ses extrémités sur les surfaces formées par les bords supérieurs des parois latérales 16, entre le plan défini par les longs tirants 18 et le plan dans lequel se trouvent les tirants plus courts 20, de façon à pouvoir être mis en place et démontés par le haut. Le tourillon 9 du culbuteur d'admission 3 est logé dans des alésages 23 qui traversent les parois latérales et sont alignées. Le montage et le démontage du tourillon 9 se fait donc latéralement par rapport au support 7.

Pour réaliser ce genre de logement, chaque paroi latérale est conformée pour présenter dans la vue latérale de la figure 2 un profil en forme d'une marche, avec une partie inférieure, sur la figure sensiblement horizontale 24, située entre un tirant 18 et un tirant 20 et destiné à la réception du tourillon 8, une partie sensiblement horizontale supérieure 25 sur laquelle prennent appui les écrous 19 des tirants 18 et une partie 26 en saillie au-delà du socle 13 vers l'extrémité 11 du culbuteur 1, de forme arrondie et destiné à loger le tourillon 9. La zone intermédiaire 27 de la paroi, située entre les deux parties horizontales 24, 25, s'étend verticalement, c'est-à-dire perpendiculairement aux bords 24 et 25.

Comme le montre les figures 2 et 3, le tourillon 8 comprend une partie médiane cylindrique 28 sur laquelle est monté rotatif le coussinet 29 du culbuteur d'échappement 1, et, de part et d'autre de cette partie cylindrique 28, une partie à section transversale sensiblement rectangulaire 30.

La partie centrale cylindrique 28 a une largeur inférieure à la distance des deux parois 16 pour pouvoir s'engager entre celles-ci. C'est par les parties extrêmes à section triangulaire 30 que le tourillon 8 repose sur les bords 24 des parois latérales 16, qui à cet effet présentent un évidement de logement de forme rectangulaire approprié. Par une surface latérale chaque extrémité du tourillon s'applique contre la zone verticale 27 du bord d'une paroi latérale 16, ce qui permet d'obtenir un assemblage très rigide du tourillon et des parois latérales du support. Le tourillon 8 est fixé à chaque extrémité dans son évidement de logement par un tirant 31 fileté à ses deux extrémités. Pour le passage des tirants 31, chaque partie extrême comprend un alésage 32 qui est en alignement axial avec un trou taraudé 33 pratiqué dans la paroi latérale 16 correspondante. Selon la figure 3, chaque tirant 31 est vissé dans un trou taraudé 33 tandis qu'un écrou 34 en forme d'un chapeau est vissé sur l'extrémité libre du tirant jusqu'à ce qu'il vienne en-butée sur la surface supérieure de la partie extrême à section transversale 30 du tourillon 8.

Il est encore à noter que la longueur du tourillon 8 est telle qu'il ne dépasse pas axialement les parois latérales 16.

On comprend que le dispositif de support qui vient d'être décrit assure un montage et démontage faciles et rapides du culbuteur d'échappement, sans qu'il soit nécessaire d'enlever le support et/ou le culbuteur d'admission 3, et ceci en raison du fait que le tourillon du culbuteur d'échappement 1 est fixé sur le support 7 par des tirants 31 individuels et que l'accès à son logement sur le support est libre et n'est pas encombré par d'autres parties de la culbuterie.

Ainsi, si l'on désire procéder à un démontage d'une soupape d'échappement 2, il suffit de desserrer les écrous 34 des tirants 31, pour que le tourillon soit prêt pour être enlevé avec le culbuteur d'échappement 1.

Bien entendu, l'invention n'est nullement limitée au mode de réalisation décrit et représenté qui n'a été donné qu'à titre d'exemple. En particulier, elle comprend tous les moyens constituant des équivalents techniques des moyens décrits ainsi que leurs combinaisons, si celles-ci sont exécutées suivant son esprit et mises en oeuvre dans le cadre des revendications qui suivent.

Revendications de brevet

1. Dispositif de support pour la culbuterie d'un moteur à combustion interne, notamment un moteur de grande taille, du type comprenant un bloc de support fixé de façon amovible sur la culasse du moteur et dans lequel sont montés deux dispositifs culbuteurs, chacun rotatif autour d'un tourillon, un dispositif culbuteur pour la commande d'un dispositif de soupape d'échappement et l'autre pour la commande d'un dispositif de soupape d'admission, un des dispositifs culbuteurs étant disposé au niveau de la partie centrale dudit support et l'autre dispositif, notamment à deux bras pour la commande simultanée de deux soupapes, étant situé latéralement du support, avec un bras de chaque côté de celui-ci, caractérisé en ce que notamment le dispositif culbuteur (1) pour la commande du dispositif de soupape d'échappement (2) est monté dans ledit support (7) de façon sélectivement amovible, sans démontage du support (7) et de l'autre dispositif culbuteur (3).

2. Dispositif selon la revendication 1, caractérisé en ce que le dispositif culbuteur pour la commande du dispositif de soupape d'échappement (2) est formé par le dispositif culbuteur central (1) précité et est fixé sur le support (7) par des tirants individuels (31) séparés et est démontable par le haut par rapport à la surface supérieure de la culasse.

3. Dispositif selon l'une des revendications 1 ou 2, caractérisé en ce que le support précité comprend deux parois latérales (16) s'étendant vers le haut, par rapport à la surface supérieure de la culasse, et définissant entre elles un espace (10) permettant le passage du dispositif culbuteur central (1), et que le tourillon (8) de ce dernier prend appui par chaque extrémité (30) sur les surfaces (24) formées par le bord supérieur desdites parois latérales (16).

4. Dispositif selon la revendication 2 ou 3, caractérisé en ce que chaque extrémité (30) du tourillon (8) précité est fixée sur le support précité par un tirant individuel (31) qui traverse cette extrémité (30) et est ancrée dans une paroi latérale (16), sur l'extrémité libre dudit tirant étant vissé un écrou (34) venant en appui sur l'extrémité (30) du tourillon (8).

5. Dispositif selon l'une des revendications 2 à 4, caractérisé en ce que la partie extrême (30) du tourillon (8) précité du dispositif culbuteur central (1) présente de préférence au moins deux surfaces parallèles, l'une pour prendre appui sur son support (16) et l'autre pour l'appui de l'écrou (34) d'un tirant de fixation individuel (31) précité qui traverse ladite partie extrême (30).

6. Dispositif selon l'une des revendications 3 à 5, caractérisé en ce que chaque extrémité (30) du tourillon (8) précité du dispositif culbuteur central (1) est encastré dans un évidement de forme appropriée pratiquée dans la surface d'appui (24) de la paroi latérale (16) précitée.

7. Dispositif selon l'une des revendications précédentes, caractérisé en ce que le support (7) précité est fixé sur la culasse notamment par deux tirants de fixation (18, 20) situés dans un plan sensiblement au milieu entre les tourillons (8, 9) précités des deux dispositifs culbuteurs (1, 3) précités.

0014644

8. Dispositif selon l'une des revendications précédentes, caractérisé en ce que les axes des tourillons (8, 9) précités des deux dispositifs culbuteurs (1,3) sont situés sensiblement au même niveau par rapport à la surface supérieure de la culasse précitée, et que le tourillon (9) des dispositifs culbuteurs latéral (3) est logé dans des alésages (23) alignés pratiqués dans les parois latérales (16) précitées.

9. Dispositif selon l'une des revendications précédentes, caractérisé en ce que le dispositif culbuteur central (1) précité est un culbuteur à fourche pour la commande simultanée de deux soupapes (2).

10. Dispositif selon l'une des revendications 4 à 9, caractérisé en ce que le dispositif de soupape commandé par le dispositif culbuteur central (1) est démontable par desserrage des écrous (34) précités vissés sur les tirants individuels (31) séparés précités et par retrait du tourillon (8) du dispositif culbuteur central (1), ensemble avec ce dernier.

11. Moteur à combustion interne, caractérisé en ce qu'il est équipé d'un dispositif de support (7) tel que défini par l'une des revendications précédentes.

Fig. 1.

Fig. 3.

Fig. 2.

Office européen
des brevets

# RAPPORT DE RECHERCHE EUROPEENNE

**0014644**

Numéro de la demande

EP 80 40 0156

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 226 556 (MAN) <br> * Figures 1,2; page 3, lignes 4-26 * <br><br> -- <br><br> FR - A - 2 155 456 (MITSUI) <br> * Figures 1,2; page 5, lignes 1-15 * <br><br> -- <br><br> US - A - 3 251 350 (THOMPSON) <br> * Figures 3,4,5; colonne 2, lignes 1-37 * <br><br> -- | 1,2,3 <br><br><br><br><br> 1-4 <br><br><br><br><br> 2,3 | F 01 L   1/18 <br> 1/26 |
| A | FR - E - 94 585 (CITROEN) <br> * Figure 8 * <br><br> -- | 2 | **DOMAINES TECHNIQUES RECHERCHES (Int. Cl. 3)** <br><br> F 01 L |
| A | FR - A - 2 251 221 (SEMT) <br> * Figure 1; page 5, lignes 1-12 * <br><br> ---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

☒ Le présent rapport de recherche a été établi pour toutes les revendications

| Lieu de la recherche | Date d'achevement de la recherche | Examinateur |
|---|---|---|
| La Haye | 19-03-1980 | WASSENAAR |

OEB Form 1503.1   06.78